# EUROPÄISCHE PATENTANMELDUNG

(11) **EP 1 764 606 A2**
(43) Veröffentlichungstag der Anmeldung: **21.03.2007**
(21) Anmeldenummer: 06018747.3
(22) Anmeldetag: 07.09.2006
(51) Int. Cl.: G01N 17/00

(54) **Vorrichtung und Verfahren zum Erkennen der laser-induzierten Schädigung eines Targets mittels eines Teilchendetektors, welcher entweder als Drucksensor oder als Strommeßgerät ausgebildet ist**

(30) Priorität: 16.09.2005 DE 102005045308
(71) Anmelder: Deutsches Zentrum für Luft- und Raumfahrt e.V., 51147 Köln (DE)
(72) Erfinder: Riede, Wolfgang, 75417 Mühlacker (DE); Allenspacher, Paul, 73265 Dettingen (DE)
(74) Vertreter: Hoeger, Stellrecht & Partner Patentanwälte

(57) **Zusammenfassung**

Um eine Einrichtung zum Erkennen der Schädigung eines mittels einer Strahlung beaufschlagten Targets, derart zu verbessern, dass die Schädigung des Targets möglichst gut erkannt werden kann, wird vorgeschlagen, dass das Target in einer Vakuumkammer angeordnet ist, dass der Vakuumkammer ein Teilchenstromsensor zugeordnet ist und dass der Teilchenstromsensor mit einer Detektionseinrichtung gekoppelt ist, welche so arbeitet, dass sie einen schädigungsbedingten Teilchenstrom erkennt. Der Teilchenstromsensor kann entweder als Drucksensor oder als ein Sensor ausgebildet sein, welcher den von Teilchenstrom ausgelösten elektrischen Strom misst.

## Beschreibung

Die Erfindung betrifft eine Einrichtung zum Erkennen der Schädigung eines mittels einer Strahlung beaufschlagten Targets.

Bei den bislang bekannten Einrichtungen erfolgt ein Erkennen der Schädigung durch Einsatz der Streulichttechnik, mit welcher eine Veränderung einer Streulichtamplitude erfassbar ist.

Ein derartiges Verfahren ist beispielsweise in dem Artikel "Automated pulsed testing using a scatter probe damage monitor", J. B. Franck et al., NBS 727, S. 71-76 (1986) bekannt.

Der Einsatz der Streulichttechnik ist bereits deshalb störempfindlich, weil Einstreuungen das Messergebnis erheblich verfälschen können, darüber hinaus ist diese Streulichttechnik in erheblichem Maße justageempfindlich, da die Justierung des Streulichts relativ zu einem Wechselwirkungsbereich zwischen Strahlung und Target sich sehr stark auf eine Amplitude des Streulichts auswirkt.

Im Übrigen bereiten gekrümmte optische Oberflächen erhebliche Schwierigkeiten und können das Erkennen der Schädigung mit der Streulichttechnik sogar unmöglich machen.

Der Erfindung liegt daher die Aufgabe zugrunde, eine Einrichtung der gattungsgemäßen Art derart zu verbessern, dass die Schädigung des Targets möglichst gut erkannt werden kann.

Diese Aufgabe wird bei einer Einrichtung der eingangs beschriebenen Art erfindungsgemäß dadurch gelöst, dass das Target in einer Vakuumkammer angeordnet ist, dass der Vakuumkammer ein Teilchenstromsensor zugeordnet ist und dass der Teilchenstromsensor mit einer Detektionseinrichtung gekoppelt ist, welche so arbeitet, dass sie einen schädigungsbedingten Teilchenstrom erkennt.

Der Vorteil dieser Lösung ist darin zu sehen, dass durch den Nachweis des durch die Schädigung aufgrund der Strahlung entstehenden Teilchenstroms eine Detektion erfolgt, die unabhängig von Streulicht und optischen Eigenschaften des Targets ist, da das Entstehen des Teilchenstroms unmittelbar mit dem Auftreten der Schädigung des Targets zusammenhängt.

Darüber hinaus ist eine derartige Detektion der Schädigung justageunempfindlich, da der Teilchenstrom sich ausgehend von der Schädigung in einem großen Raumbereich ausbreitet und lediglich ein Teil dieses Raumbereichs herangezogen werden muss, um die Existenz des Teilchenstroms nachzuweisen.

Besonders günstig ist es dabei, wenn der Teilchenstromsensor relativ zum Target so angeordnet ist, dass sich ein von einem Wechselwirkungsbereich von Strahlung und Target ausbreitender Teilchenstrom im Wesentlichen ohne Umlenkung zum Teilchenstromsensor hin ausbreitet.

Der Teilchenstrom kann sich dabei von unterschiedlichen Seiten des Targets ausgehend ausbreiten.

So sieht eine vorteilhafte Lösung vor, dass der Teilchenstromsensor einer von der Strahlung beaufschlagten Frontseite des Targets zugewandt ist.

Es ist aber auch denkbar, dass der Teilchenstromsensor einer Rückseite des Targets zugewandt ist, aus welcher die Strahlung beim Durchsetzen des Targets austritt.

Um mit Sicherheit einen nennenswerten Teilchenstrom detektieren zu können, ist vorzugsweise vorgesehen, dass der Teilchenstromsensor so angeordnet ist, dass er einen Teilchenstrom in einer Ausbreitungsrichtung detektiert, die mit einer senkrecht zur jeweiligen Seite des Targets und durch den Wechselwirkungsbereich von Strahlung und Target verlaufenden Flächennormalen einen Winkel von weniger als 80° einschließt.

Noch vorteilhafter ist es, wenn die Ausbreitungsrichtung mit der Flächennormalen einen Winkel von weniger als 70° einschließt.

Besonders günstig ist es, wenn die Ausbreitungsrichtung mit der Flächennormalen einen Winkel von weniger als 60° einschließt.

Um den Teilchenstrom besonders vorteilhaft detektieren zu können, ist es günstig, wenn der Druck in der Vakuumkammer so niedrig ist, dass eine mittlere freie Weglänge der Atome und/oder Moleküle im Gas der Vakuumkammer größer ist als ein Abstand zwischen dem Wechselwirkungsbereich von Strahlung und Target und dem Teilchenstromsensor.

Vorzugsweise ist dabei der Druck in der Vakuumkammer kleiner als 10⁻⁴ mbar.

Noch vorteilhafter ist es, wenn der Druck in der Vakuumkammer kleiner als 10⁻⁵ mbar ist. Günstige Werte für den Druck liegen zwischen 10⁻⁴ mbar und 10⁻⁶ mbar.

Um den Teilchenstrom sicher detektieren zu können, ist zweckmäßigerweise vorgesehen, dass der schädigungsbedingte Druckanstieg mindestens 1/50 des Drucks in der Vakuumkammer beträgt.

Auch der Teilchenstromsensor hat üblicherweise einen druckabhängigen Arbeitsbereich. Vorzugsweise ist dabei der Teilchenstromsensor so ausgebildet, dass er einen Arbeitsbereich aufweist, der bei Drucken von kleiner 10⁻⁴ mbar liegt.

Hinsichtlich der Art des Teilchenstromsensors wurden bislang keine näheren Angaben gemacht. So sieht eine vorteilhafte Lösung vor, dass der Teilchenstromsensor ein Drucksensor ist, das heißt, dass der Teilchenstrom über die Erhöhung des Drucks in der Vakuumkammer erfasst wird.

Eine andere Lösung sieht vor, dass der Teilchenstromsensor ein Sensor für einen vom Teilchenstrom ausgelösten elektrischen Strom zwischen dem Target und einem Sensorkopf ist.

Bei den bislang beschriebenen Einrichtungen wurde lediglich davon ausgegangen, dass ein Teilchenstrom detektiert wird.

Ergänzend zu den bislang beschriebenen Ausführungsformen ist es aber auch denkbar wenn das Target mit einer Sensorstrahlung beaufschlagt ist und wenn eine Schädigung des Targets durch eine Beeinflussung der Sensorstrahlung detektiert ist.

Insbesondere ist dabei vorgesehen, dass an dem Target eine Streuung der Sensorstrahlung erfolgt und dass die Schädigung durch Detektion der Streuung der Sensorstrahlung erkennbar ist.

Die Strahlung im Rahmen der erfindungsgemäßen Lösung kann dabei unterschiedlichster Natur sein.

Beispielsweise wäre es denkbar, als Strahlung eine Teststrahlung einzusetzen, mit welcher ein Testen des Targets erfolgen soll, so dass das Target die zu testende Komponente darstellt.

Alternativ dazu ist es aber auch denkbar, als Strahlung die Laserstrahlung in einem Laserverstärkersystem zu verwenden, so dass die Laserstrahlung des Laserverstärkersystems selbst die Teststrahlung darstellt, wobei das Target eine optische Komponente des Laserverstärkersystems ist, die einerseits dazu dient, die Laserstrahlung zu formen und/oder zu führen, andererseits aber auch gleichzeitig im Hinblick auf ihre Schädigung überwacht wird, so dass in einem arbeitenden Lasersystem die Möglichkeit besteht, die für die Funktion erforderliche optische Komponente gleichzeitig auf Schädigung zu überwachen.

Eine derartige optische Komponente kann beispielsweise eine Komponente einer Abbildungsoptik sein, es kann aber auch eine Komponente eines Absorbers sein, der in dem Laserverstärkersystem vorgesehen ist.

Darüber hinaus betrifft die Erfindung eine Testeinrichtung zur Durchführung eines Resistenztests eines Targets gegenüber auf dieses auftreffender Teststrahlung, umfassend eine Teststrahlungsquelle zur Erzeugung der Teststrahlung und eine Einrichtung zum Erkennen der Schädigung des Targets.

Derartige Testeinrichtungen sind ebenfalls aus dem Stand der Technik bekannt, wobei die Einrichtung zum Erkennen der Schädigung die Schädigung über Streulicht detektiert.

Die Lösung der eingangs genannten Aufgabe wird daher bei einer derartigen Testeinrichtung dadurch gelöst, dass die Einrichtung zum Erkennen der Schädigung des Targets nach einem der voranstehenden Merkmale ausgebildet ist.

Um den Resistenztest des Targets möglichst umfassend durchführen zu können, das heißt beispielsweise mit unterschiedlichen Leistungsdichten der Teststrahlung, ist vorgesehen, dass die Teststrahlung und das Target relativ zueinander bewegbar sind, so dass der Wechselwirkungsbereich von Teststrahlung und Target auf dem Target wandert und eine veränderte Teststrahlung, beispielsweise Teststrahlung mit anderer Leistungsdichte, jeweils an einem anderen Wechselwirkungsbereich mit dem Target wechselwirken kann.

Dabei wäre es theoretisch denkbar, die Teststrahiung relativ zum Target zu bewegen. Dies erfordert jedoch optisch einen sehr großen Justieraufwand.

Aus diesem Grund ist vorzugsweise vorgesehen, dass das Target relativ zur Teststrahlung bewegbar ist.

Eine besonders vorteilhafte Lösung sieht dabei vor, dass das Target stationär in der Vakuumkammer angeordnet ist und dass die Vakuumkammer mitsamt dem Target relativ zur Teststrahlung bewegbar ist, also dass der Verlauf der Teststrahlung beibehalten werden kann und lediglich das Target verschoben wird, um einen anderen Wechselwirkungspunkt von Teststrahlung und Target zu erreichen.

Hinsichtlich der Strahlungsquelle wurden daher ebenfalls keine näheren Aussagen gemacht. Beispielsweise könnte die Strahlungsquelle eine kontinuierliche Strahlung erzeugen.

Eine besonders vorteilhafte Lösung sieht jedoch vor, dass die Strahlungsquelle zum Erzeugen der Strahlung eine gepulste Strahlungsquelle ist. Eine derartige gepulste Strahlung hat den Vorteil, dass allein durch Abzählen der Pulse der Strahlung die Dauer der Einwirkung der Teststrahlung ermittelbar ist.

Die Strahlung könnte beispielsweise Elektronenstrahlung oder alpha-Strahlung sein.

Eine besonders vorteilhafte Lösung sieht jedoch vor, dass die Strahlungsquelle eine Strahlungsquelle für elektromagnetische Strahlung ist.

Zweckmäßigerweise ist dabei die Strahlungsquelle zum Erzeugen der Strahlung als Laserstrahlungsquelle ausgebildet.

Darüber hinaus wird die eingangs genannte Aufgabe auch durch ein Verfahren zum Erkennen der Schädigung eines mittels einer Strahlung beaufschlagten Targets gelöst, wobei erfindungsgemäß das Target im Vakuum angeordnet wird und in dem Vakuum ein schädigungsbedingter Teilchenstrom detektiert wird.

Dabei ist es günstig, wenn ein sich von einem Wechselwirkungsbereich von Strahlung und Target ausbreitender Teilchenstrom im Wesentlichen ohne Umlenkung detektiert wird.

Dabei besteht die Möglichkeit, den Teilchenstrom von unterschiedlichen Seiten des Targets zu detektieren. Eine Lösung sieht vor, dass ein sich von einer von der Strahlung beaufschlagten Frontseite des Targets ausbreitender Teilchenstrom detektiert wird.

Eine andere Lösung sieht vor, dass ein sich von einer Rückseite des Targets, aus welcher die Strahlung beim Durchsetzen des Targets austritt, ausbreitender Teilchenstrom detektiert wird.

In einer günstigen Ausführungsform wird der Teilchenstrom in einer Ausbreitungsrichtung detektiert, die mit einer senkrecht zur jeweiligen Seite des Targets und durch den Wechselwirkungsbereich von Strahlung und Target verlaufenden Flächennormalen einen Winkel von weniger als 80°einschließt.

Dabei ist es noch günstiger, wenn die Ausbreitungsrichtung mit der Flächennormalen einen Winkel von weniger als 70°, noch besser einen Winkel von weniger als 60° einschließt.

Um den Teilchenstrom optimal nachweisen zu können, ist vorzugsweise vorgesehen, dass der Druck im Vakuum so niedrig gehalten wird, dass die mittlere freie Weglänge der Atome und/oder Moleküle im Vakuum größer ist als ein Abstand zwischen dem Wechselwirkungspunkt von Strahlung und Target und einem Ort der Detektion des Teilchenstroms.

Vorzugsweise wird der Druck in der Vakuumkammer auf weniger 10⁻⁴ mbar gehalten.

Noch vorteilhafter ist es, wenn der Druck in der Vakuumkammer auf weniger als 10⁻⁵ mbar gehalten wird.

Um den Teilchenstrom noch sinnvoll detektieren zu können, ist vorzugsweise vorgesehen, dass der schädigungsbedingte Druckanstieg mindestens ungefähr 1/50 des Drucks im Vakuum beträgt.

Ferner wird zweckmäßigerweise der Teilchenstrom in einem Arbeitsbereich erfasst, der bei Drucken von kleiner 10⁻⁴ mbar liegt.

Hinsichtlich der Detektion des Teilchenstroms wurden bislang keine näheren Angaben gemacht. So sieht eine vorteilhafte Lösung vor, dass der Teilchenstrom durch einen Druckanstieg im Vakuum detektiert wird.

Eine andere vorteilhafte Lösung sieht vor, dass der Teilchenstrom durch einen elektrischen Strom zwischen dem Target und einem Sensorkopf detektiert wird.

Im Zusammenhang mit den bislang beschriebenen Ausführungsbeispielen wurde lediglich von einer Detektion der Schädigung über einen Teilchenstrom ausgegangen.

Ergänzend hierzu sieht ein vorteilhaftes Ausführungsbeispiel vor, dass das Target mit einer Sensorstrahlung beaufschlagt wird und dass die Schädigung des Targets durch eine Beeinflussung der Sensorstrahlung detektiert wird.

Besonders günstig ist es, wenn die Schädigung durch Detektion der Streuung einer Sensorstrahlung erfasst wird.

Das erfindungsgemäße Verfahren kann dabei vorsehen, dass als Strahlung zum Erfassen der Schädigung eine Teststrahlung vorgesehen ist, die lediglich dazu dient, das Target zu testen.

Alternativ dazu ist es aber auch denkbar, als Strahlung die Laserstrahlung in einem Laserverstärkersystem zu verwenden, so dass die in dem Laserverstärkersystem verstärkte Laserstrahlung gleichzeitig die Teststrahlung für das Target darstellt, das in diesem Fall eine optische Komponente des Laserverstärkersystems ist.

Die optische Komponente hat somit einerseits ihre Funktion hinsichtlich der Führung und/oder Formung des Laserstrahlungsfeldes, andererseits wird gleichzeitig die optische Komponente auf Schädigung überwacht.

Eine derartige optische Komponente könnte beispielsweise die Komponente einer Abbildungs- oder Umlenkungsoptik sein. Es ist aber auch denkbar, als optische Komponente beispielsweise einen Absorber vorzusehen, der ebenfalls damit auf Schädigung überwacht werden kann.

Darüber hinaus wird die eingangs beschriebene Aufgabe durch ein Verfahren zur Durchführung eines Resistenztests eines Targets gegenüber auf dieses auftreffender Teststrahlung, wobei eine Schädigung des Targets detektiert wird, erfindungsgemäß dadurch gelöst, dass das Verfahren zum Erkennen der Schädigung des Targets entsprechend den vorausstehend beschriebenen Verfahrensmerkmalen durchgeführt wird.

Besonders günstig ist es bei einem derartigen Verfahren, wenn die Teststrahlung und das Target relativ zueinander bewegt werden.

Dabei kann die Relativbewegung beispielsweise eine Bewegung der Teststrahlung relativ zum Target zur Folge haben.

Eine besonders vorteilhafte und apparativ einfacher auszuführende Lösung besteht darin, dass das Target relativ zur Teststrahlung bewegt wird, weil damit die Justierprobleme beim Bewegen der Teststrahlung entfallen.

Eine besonders günstige Lösung sieht vor, dass das Target stationär in einer Vakuumkammer angeordnet wird und die Vakuumkammer mitsamt dem Target relativ zur Teststrahlung bewegt wird.

Hinsichtlich der Strahlung selbst wurden bislang keine näheren Angaben gemacht.

Eine zweckmäßige Lösung könnte eine kontinuierliche Strahlung vorsehen.

Hinsichtlich der Durchführung des Verfahrens ist es jedoch vorteilhafter, wenn die Teststrahlung gepulst eingesetzt wird.

Zweckmäßigerweise wird dabei als Strahlung elektromagnetische Strahlung eingesetzt.

Vorzugsweise wird als Strahlung Laserstrahlung eingesetzt, wobei die Strahlung in Wellenlängenbereich von infrarot bis ultraviolett liegt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen schematischen Längsschnitt durch ein erstes Ausführungsbeispiel einer erfindungsgemäßen Einrichtung in Form einer Testeinrichtung;
- Fig. 2: eine ausschnittsweise vergrößerte Darstellung des Targets mit auf diesem auftreffender Teststrahlung;
- Fig. 3: eine nochmals vergrößerte Darstellung eines Schnitts durch das Target in einem Wechselwirkungsbereich mit der Teststrahlung;

- Fig. 4: eine Darstellung des Targets mit auf dieses auftreffender Teststrahlung und sich ausbildenden Ausbreitungskeulen von Teilchenströmen;
- Fig. 5: eine exemplarische Darstellung von Teststrahlungspulsen und von diesen durch Schädigung des Targets erzeugten Signalen bei einem ersten Testfall;
- Fig. 6: eine Darstellung ähnlich Fig. 5 bei einem zweiten Testfall;
- Fig. 7: eine Darstellung ähnlich Fig. 5 bei einem dritten Testfall;
- Fig. 8: eine Darstellung ähnlich Fig. 5 bei einem vierten Testfall;
- Fig. 9: eine Darstellung ähnlich Fig. 1 eines zweiten Ausführungsbeispiels einer erfindungsgemäßen Einrichtung in Form einer Testeinrichtung;
- Fig. 10: eine Ansicht in Richtung des Pfeils X in Fig. 9;

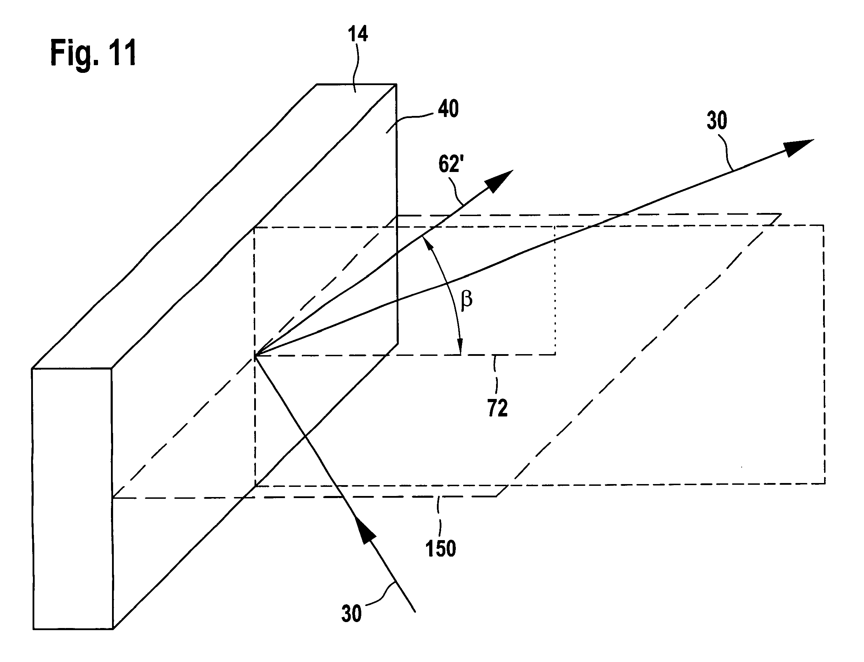

- Fig. 11: eine vergrößerte Darstellung von Target und auf dieses einfallender Teststrahlung mitsamt einer ausgewählten Ausbreitungsrichtung;
- Fig. 12: eine Darstellung ähnlich Fig. 1 eines dritten Ausführungsbeispiels einer erfindungsgemäßen Einrichtung in Form einer Testeinrichtung und

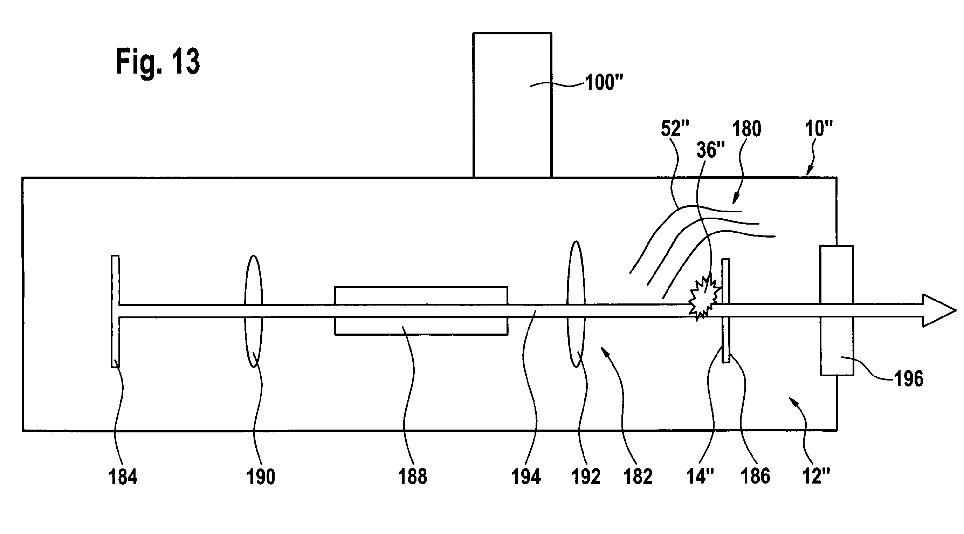

- Fig. 13: eine Darstellung ähnlich Fig. 1 eines vierten Ausführungsbeispiels einer erfindungsgemäßen Einrichtung.

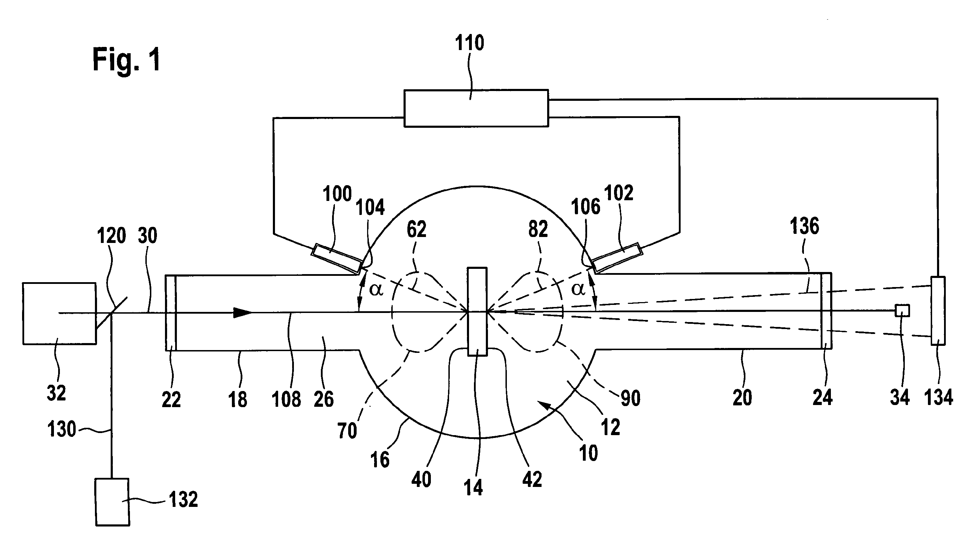

Ein erstes Ausführungsbeispiel einer erfindungsgemäßen Einrichtung, in diesem Fall einer Testeinrichtung, dargestellt in Fig. 1, umfasst ein als Ganzes mit 10 bezeichnetes Vakuumgefäß welches eine Testkammer 12 aufweist, in welcher ein zu testendes Target 14 angeordnet ist.

Die Testkammer 12 ist dabei von einem Testkammergehäuse 16 umschlossen, an welches sich auf gegenüberliegenden Seiten Fortsätze 18 und 20 anschließen, die auf ihren dem Testkammergehäuse 16 abgewandten Seiten Fenster 22 und 24 tragen.

Das Testkammergehäuse 16 und die Fortsätze 18 und 20 bilden dabei im Wesentlichen das Vakuumgefäß 10 mit einer von diesem umschlossenen Vakuumkammer 26, wobei die Testkammer 12 Teil der Vakuumkammer 26 ist.

Zur Erzeugung eines Teststrahls 30 ist eine Teststrahlungsquelle 32 vorgesehen, aus welcher der Teststrahl 30 austritt und dabei beispielsweise über das Fenster 22 in die Vakuumkammer 26 eintritt, das Target 14 durchsetzt und über das Fenster 24 aus der Vakuumkammer 26 wieder austritt, um von einem außerhalb der Vakuumkammer 26 angeordneten Absorber 34 wieder absorbiert zu werden.

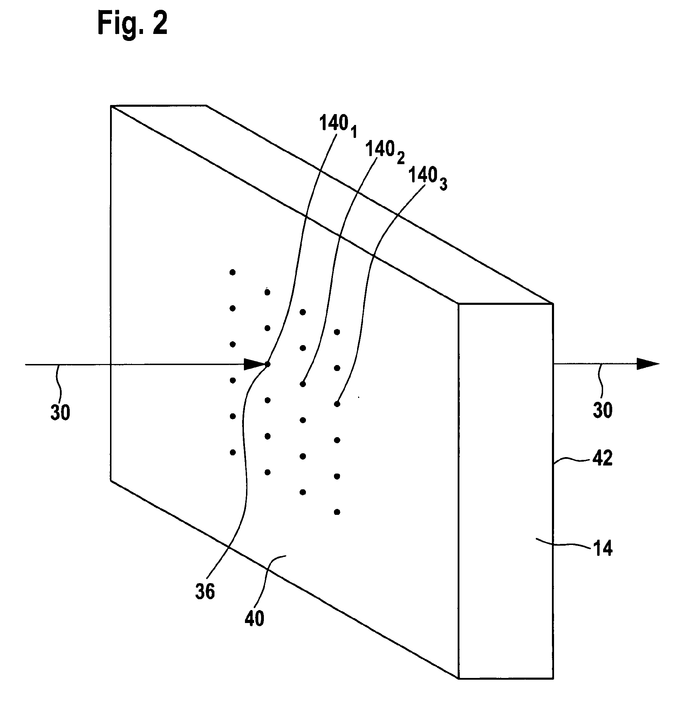

Wie in Fig. 2 dargestellt, trifft die Teststrahlung 30 zum Testen des Targets 14 in einem punktförmigen Wechselwirkungsbereich 36 auf eine Frontseite 40 des Targets 14 auf, durchsetzt das Target 14 und tritt aus einer Rückseite 42 des Targets wieder aus diesem aus, um sich in Richtung des Absorbers 34 auszubreiten.

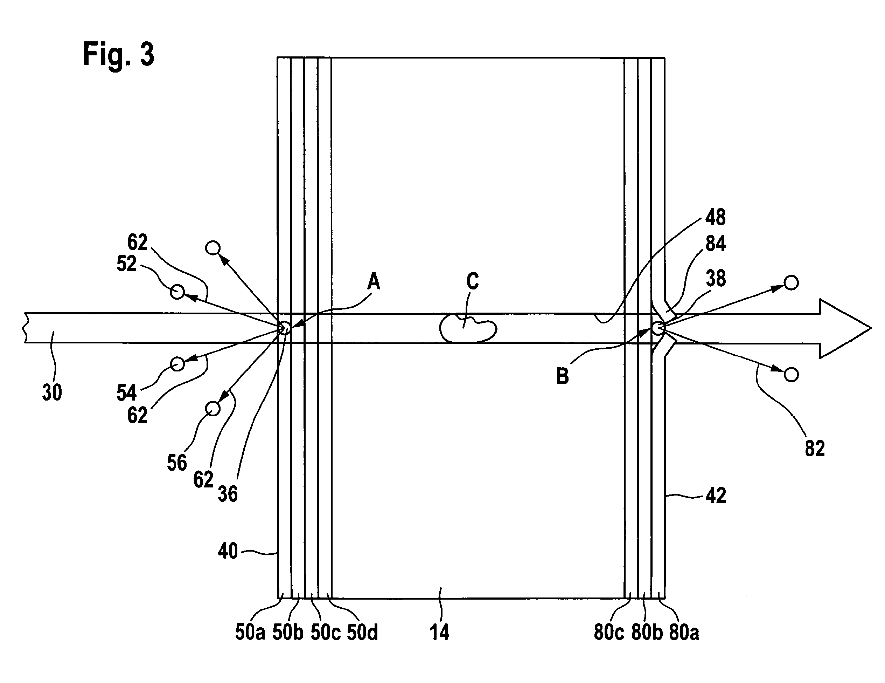

Wie nochmals vergrößert in Fig. 3 dargestellt, wird bei dem ersten Ausführungsbeispiel das Target 14 von der Teststrahlung 30 durchsetzt, wobei die Teststrahlung 30 an der Frontseite 40 in dem punktförmigen Wechselwirkungsbereich 36 in das Target 14 eintritt und in dem punktförmigen Wechselwirkungsbereich 38 aus der Rückseite 42 austritt.

Die Teststrahlung 30 dient dazu, zu untersuchen, ob, und wenn ja, ab wann eine Schädigung des Targets 14 durch die Teststrahlung 30 auftritt.

Dabei kann eine Schädigung des Targets 14 innerhalb eines sich von dem punktförmigen Wechselwirkungsbereich 36 zum punktförmigen Wechselwirkungsbereich 38 das Target 14 erstreckenden Durchtrittskanals 48 durch auftreten, und zwar an folgenden Stellen.

Eine erste Möglichkeit besteht in einer Schädigung an einer Stelle A auf der Frontseite 40 des Targets 14 unmittelbar nach dem Eintritt der Teststrahlung 30 in sich an die Frontseite 40 anschließende obere Schichten 50a, 50b, 50c und 50d des Targets 14.

Ist beispielsweise das Target 14 eine optische Komponente, so können die obersten Schichten 50a bis 50b oberflächliche Beschichtungen der optischen Komponente, beispielsweise Anti-Reflexschichten sein.

Sind diese Schichten 50 empfindlich gegen die Bestrahlung mit der Teststrahlung 30, so tritt die Schädigung bereits an der Stelle A, vorzugsweise im Bereich der obersten Schicht 50a auf und es wird durch die Teststrahlung 30 beispielsweise das Material der obersten Schicht 50a ablatiert.

Die Ablation im Bereich der Stelle A führt dazu, dass beispielsweise das Material der obersten Schicht 50a zum Teil verdampft und sich ausgehend von der Frontseite 40 in Form eines Teilchenstroms 52, umfassend beispielsweise Atome 54, und/oder Atomcluster 56 und/oder kleine Partikel 58, in verschiedene Ausbreitungsrichtungen 62, ausbreitet und damit eine Ausbreitungskeule 70 bildet, die von der Stelle A ausgehend rotationssymmetrisch zu einer Flächennormalen 72 ist, die senkrecht auf der Frontseite 40 steht und diese in der Stelle A schneidet.

Die Ausbreitungskeule 70 gibt dabei die Ausbreitungsrichtungen 62 an, in denen sich in nennenswertem Umfang ein Teilchenstrom 52 ausbreitet.

Erfolgt beispielsweise an der Stelle A eine Ablation von Material der obersten Schicht 50a unter Bildung eines Plasmas, so stellt die Ausbreitungskeule 70 die Plasmakeule dar, die sich von der Stelle A von der Frontseite 40 weg und rotationssymmetrisch zur Flächennormalen 72 ausbreitet, wobei innerhalb der Ausbreitungskeule 70 alle Ausbreitungsrichtungen 62 liegen, längs welcher sich ein nennenswerter Materialstrom ausbreitet.

Ergänzend oder alternativ zur Schädigung des Targets 14 im Bereich der Stelle A kann aber auch eine Schädigung im Bereich der in Fig. 3 dargestellten Stelle B nahe der Rückseite 42 auftreten, wobei das Target nahe der Rückseite 42 vorzugsweise ebenfalls mehrere Schichten 80a, 80b und 80c trägt.

Dabei könnte auch eine Schädigung im Bereich der obersten, unmittelbar an die Rückseite 42 anschließenden Schicht 80a erfolgen. Es besteht aber auch die Möglichkeit, dass eine Schädigung in einer darunterliegenden Schicht, beispielsweise der Schicht 80b, erfolgt. Diese Schädigung an der Stelle B hat zur Konsequenz, dass ebenfalls Material der Schicht 80b verdampft und sich in Form eines Teilchenstroms 52 in Ausbreitungsrichtungen 82 ausbreiten, was allerdings zuvor dazu führt, dass beispielsweise die oberste Schicht 80a in ihrem nahe der Stelle B liegenden Bereich platzt und somit beispielsweise um die Stelle B herum aufgewölbte Materialränder 84 aufweist.

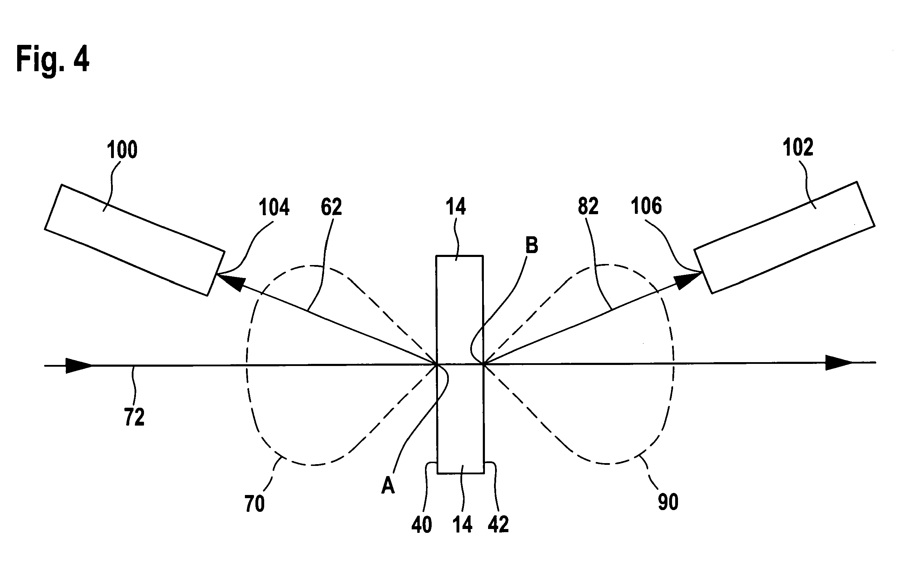

Auch in diesem Fall bildet sich, wie beispielsweise in Fig. 4 ebenfalls dargestellt, eine Ausbreitungskeule 90, in welcher alle Ausbreitungsrichtungen 82 liegen, längs welchen sich in nennenswertem Umfang ein Teilchenstrom, umfassend beispielsweise Atome, Cluster oder kleine Partikel, ausbreitet.

Es besteht aber auch die Möglichkeit, in einem inneren Bereich des Durchtrittskanals 48 an der Stelle C eine Schädigung im Target 14 zu erzeugen, die dann allerdings nicht zur Ausbildung eines sich vom Targets 14 wegbewegenden Teilchenstroms führt, sondern lediglich zu einer Materialumwandlung, die lokal die Materialeigenschaften im Target 14 signifikant verändert. Beispielsweise kann eine derartige Schädigung an der Stelle C die Transmission oder Reflektion elektromagnetischer Wellen, insbesondere die optischen Eigenschaften, signifikant beeinflussen, ohne dass jedoch ein sich in der Testkammer 12 ausbreitender Teilchenstrom auftritt.

Um die in den Ausbreitungskeulen 70 und/oder 90 auftretenden Teilchenströme erkennen zu können, ist - wie in Fig. 1 dargestellt - das Vakuumgefäß 10 mit Drucksensoren 100 und/oder 102 versehen, die so ausgerichtet sind, dass deren Sensoröffnungen 104, 106 innerhalb der Ausbreitungskeulen 70, 90 liegende ausgewählte Ausbreitungsrichtung 64, 84 für einen Teilchenstrom erfassen, so dass die sich ausgehend von der Stelle A und/oder B in der ausgewählten Ausbreitungsrichtung 64 und/oder 84 ausbreitenden Teilchen unmittelbar erfasst werden können.

Beispielsweise liegt der Druck in der Vakuumkammer vor der Schädigung des Targets 14 ungefähr zwischen 10⁻⁵ mbar und 2 x 10⁻⁵ mbar und der Druckanstieg bei Auftreten einer Schädigung liegt ungefähr zwischen 5 x 10⁻⁶ mbar und 10 x 10⁻⁶ mbar.

Die ausgewählte Ausbreitungsrichtung 64, 84 schließt mit der Ausbreitungsrichtung 108 der Teststrahlung 30 jeweils einen spitzen Winkel α ein, der kleiner 80°, vorzugsweise kleiner 60° ist.

Dadurch, dass in der Testkammer 12 der Druck unterhalb eines Werts von 10⁻⁴ mbar liegt, haben die sich von den Stellen A und/oder B ausgehend ausbreitenden Teilchen eine mittlere freie Weglänge zur Verfügung, die größer ist als ein Abstand der Eintrittsöffnungen 104, 106 der Drucksensoren 100, 102 von den Stellen A bzw. B, so dass die sich in den ausgewählten Ausbreitungsrichtungen 64 und/oder 84 ausbreitenden Teilchen ablenkungsfrei die Eintrittsöffnungen 104 und/oder 106 der Drucksensoren 100 und/oder 102 erreichen. Dadurch wird eine schnellstmögliche Erfassung einer Schädigung an den Stellen A und/oder B mittels den Drucksensoren 100 und/oder 102 sichergestellt.

Die Drucksensoren 100 und/oder 102 sind dabei mit einer Detektionseinrichtung 110 gekoppelt, welche in der Lage ist, ein Signal S der Drucksensoren 100, 102 zu detektieren und zumindest teilweise auszuwerten. Beispielsweise kann dabei die Detektionseinrichtung 100 so arbeiten, dass sie einen Druckanstieg erkennt der größer ist als 1/50 des Drucks in der Testkammer 12 vor eintretender Schädigung des Targets 14, so dass die Detektionseinrichtung 110 bei Überschreiten dieses Schwellwerts für den Druckanstieg eine Schädigung des Targets 14 sicher erkennt und registriert.

Sind dabei zwei Drucksensoren 100 und 102 vorgesehen, wie in Fig. 1 dargestellt, und einer der Drucksensoren 100 der Frontseite 40 und der andere Drucksensor 102 der Rückseite 42 zugewandt, so dass die jeweils in den innerhalb der Ausbreitungskeulen 70, 90 liegenden "ausgewählten" Ausbreitungsrichtungen 64, 84 und ausbreitenden Teilchen unmittelbar zum einen über die Drucksensoren 100, 102 erfassbaren Druckanstieg führen, um ein möglichst schnelles Ansprechen der Detektionseinrichtung 110 beim Auftreten einer Schädigung des Targets 14 zu ermöglichen.

Um zusätzlich auch noch Schädigungen des Targets 14 an der Stelle C erkennen zu können, erfolgt in bekannter Weise über einen halbdurchlässigen Spiegel 120 kolinear zur Teststrahlung 30 die Einkopplung einer Streustrahlung 130, erzeugt durch eine Streustrahlungsquelle 132, welche sowohl bei einer Schädigung an der Stelle A, als auch bei einer Schädigung an der Stelle B und bei einer Schädigung an der Stelle C gestreut wird und vorzugsweise von einem Streustrahlungsdetektor 134 detektiert wird, der koaxial zur Teststrahlung 30, vorzugsweise hinter dem Absorber 34, die sich in einem spitzen Winkel zur Teststrahlung 30 nach dem Target 14 ausbreitenden gestreuten Anteile 136 der Streustrahlung 130 detektiert.

Die gestreuten Anteile 136 treten dabei sowohl bei einer Schädigung an der Stelle A, als auch bei einer Schädigung an der Stelle B und auch bei einer Schädigung an der Stelle C auf, so dass das alleinige Auftreten einer Schädigung an der Stelle C durch Auswerten der gestreuten Anteile 134 der Streustrahlung 130 seitens der Detektionseinrichtung 110 erfassbar ist, wobei in diesem Fall kein Druckanstieg von den Sensoren 100 und 102 festzustellen ist.

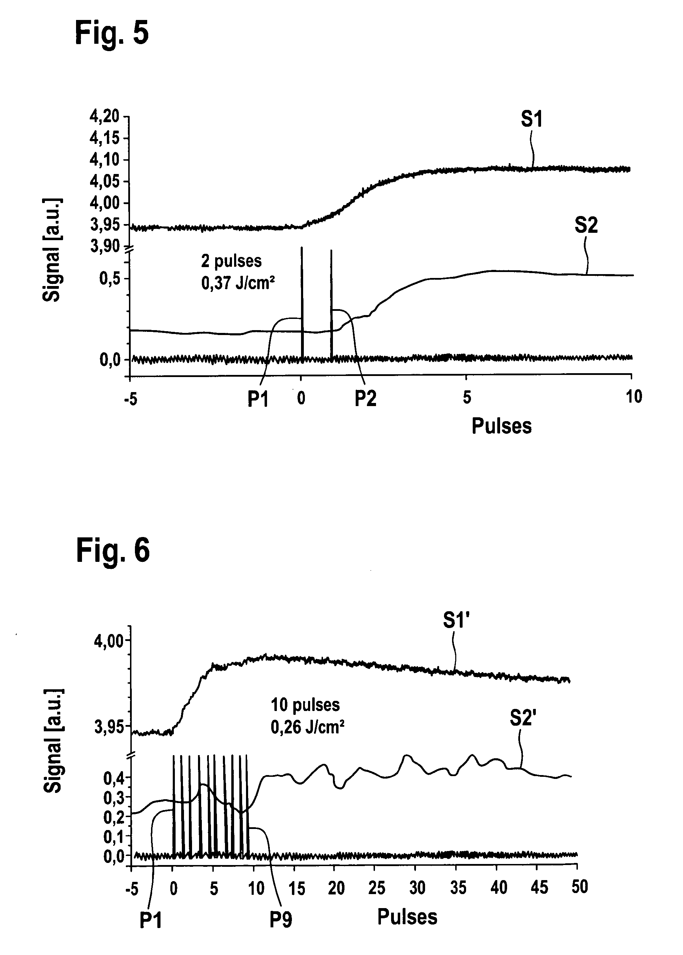

Derartige, von der Detektionseinrichtung 110 detektierbaren Signale sind als Beispiel in Fig. 5 dargestellt.

Ausgehend von einer gepulst arbeitenden Teststrahlungsquelle 32, beispielsweise einem Pulslaser, der die Pulse P1 und P2 in Fig. 5 erzeugt, die jeweils dieselbe Leistungsdichte aufweisen, kann bei dem ersten Testfall eine Schädigung des Targets bereits nach dem ersten Puls P1 auftreten, die durch den zweiten Puls noch verstärkt wird. Diese Schädigung führt, wie in Fig. 5 dargestellt, bei Betrachtung des Signals S1 von einem der Drucksensoren 100 oder 102 zu einem Anstieg des Drucksignals S1 mit einer Verzögerung, die durch die Flugzeit der Teilchen in der Testkammer 12 und durch Ansprechzeiten der Drucksensoren 100 oder 102 bedingt ist.

Außerdem ist in Fig. 5 das Signal S2 des Streulichtsensors 134 dargestellt, das ebenfalls ansteigt, das heißt es tritt eine durch die Schädigung aufgrund der Pulse P1 und P2 erzeugte Streuung auf, wobei die Zunahme des Signals S2 mit einer Zeitkonstante erfolgt, die durch die Art des Streulichtnachweises über Lock-in-Technik bedingt ist.

Die Detektionseinrichtung 110 arbeitet dabei so, dass sie, sobald sie einen signifikanten Anstieg des Signals S1 (und somit des Drucks in der Vakuumkammer) und/oder des Signals S2 festgestellt hat, die Teststrahlungsquelle 32 abschaltet, um eine weitere Beschädigung des Targets 14 zu verhindern.

Es können jedoch aber auch, je nach Material, wie für einen zweiten Testfall in Fig. 6 dargestellt, Schädigungen durch die Teststrahlung erzeugt werden, die durch die Signaländerung des Signals S2' des Streulichtsensors 134 schwer erkennbar sind, während das Signal S1' eines der Drucksensoren 102, 104 einen signifikanten und eindeutig auswertbaren Anstieg zeigt, der jedoch mit einer Zeitverzögerung einsetzt, die so groß ist, dass insgesamt mehrere Pulse P der Teststrahlung 30 auf das Target 14 auftreffen, bevor ein Abschalten der Teststrahlungsquelle 32 seitens der Detektionseinrichtung 110 erfolgt.

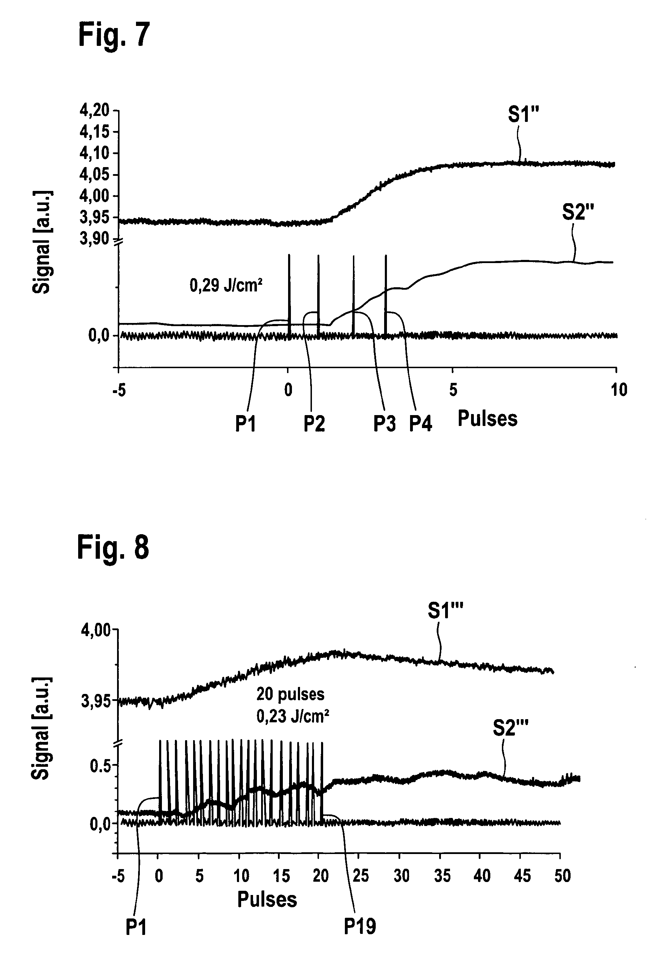

Bei einem weiteren Testfall, dargestellt in Fig. 7, führt der erste Puls P1 noch zu keiner Schädigung des Targets und erst ab dem Puls P2 beginnt sich eine Schädigung durch einen Anstieg der Signale S1' und S2" zu zeigen, der dann zunimmt, so dass ab dem Puls P4 eine Abschaltung der Strahlungsquelle 32 durch die Detektionseinrichtung 110 erfolgt.

Bei einem weiteren Testfall, dargestellt in Fig. 8, ist das Signal S2''' des Streustrahlungsdetektors schwer auszuwerten, während das Signal S1''' eines der Drucksensoren 102 oder 104 eine deutliche und signifikante Zunahme zeigt, die eine Schädigung erkennen lässt, wobei beispielsweise erst nach dem neunzehnten Puls P19 der Teststrahlung 30 ein Abschalten der Teststrahlungsquelle 32 erfolgt.

Vorzugsweise wird auch bereits bei der ersten Ausführungsform der erfindungsgemäßen Testeinrichtung das Target 14 nicht nur an einer Teststelle 140 mit einer Teststrahlung 30 einer bestimmten Leistungsdichte getestet, sondern es werden mit der Teststrahlung 30 bei unterschiedlicher Leistungsdichte jeweils einzelne Teststellen 140, beispielsweise die Teststellen 140₁, 140₂, 140₃ beaufschlagt, so dass dasselbe Target 14 im Hinblick auf seine Resistenz gegenüber der Teststrahlung 30 bei unterschiedlichen Leistungsdichten getestet werden kann, um die Resistenz des Targets 14 in Bezug auf die jeweilige Teststrahlung 30 im notwendigen Umfang, das heißt durch ausreichend viele Testfälle mit beispielsweise sich nur in der Leistungsdichte unterscheidenden Teststrahlungen 30, die jeweils in diesen zugeordneten Teststellen 140 wirksam werden, erfassen zu können.

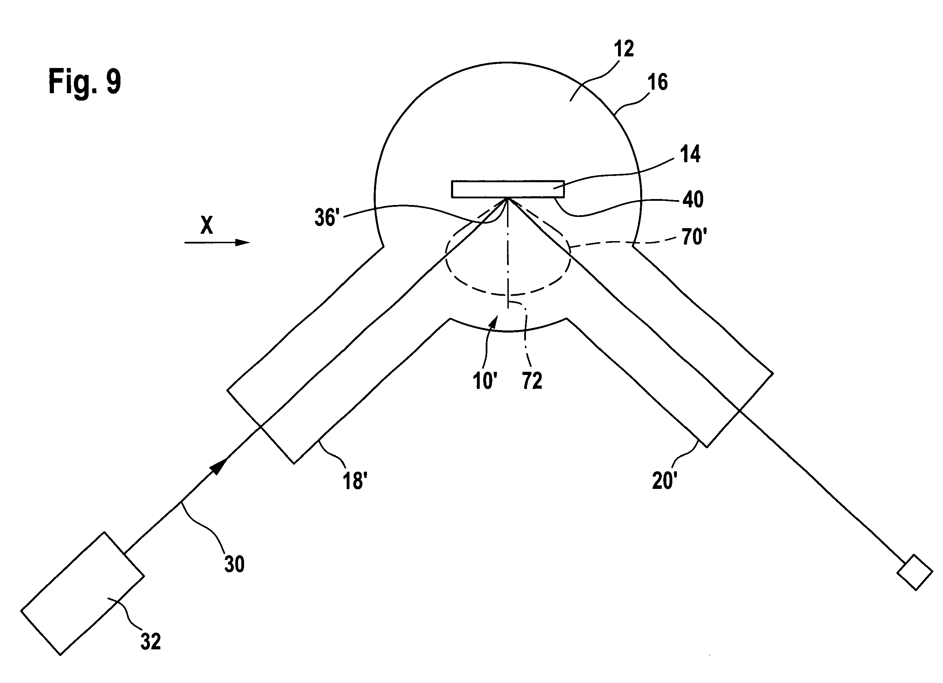

Bei einem zweiten Ausführungsbeispiel einer erfindungsgemäßen Testeinrichtung, dargestellt in Fig. 9 ist das Vakuumgefäß 10' so ausgebildet, dass die Fortsätze 18', 20' einen Winkel von weniger als 180° miteinander einschließen, wobei die Teststrahlung 30 an der Frontseite 40 des Targets 14 an den punktförmigen Bereich 36' reflektiert wird, so dass lediglich oberflächliche Schädigungen des Targets 14 in unmittelbarem Anschluss an die Frontseite 40 erkennbar sind.

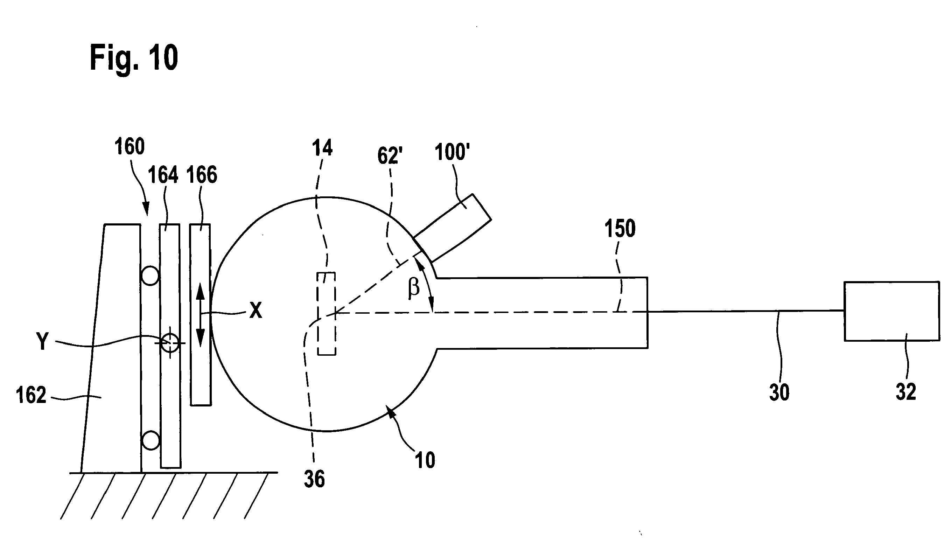

Auch in diesem Fall ist ein Drucksensor, beispielsweise ein Drucksensor 100', vorgesehen, der sich in einer Ausbreitungsrichtung von dem punktförmigen Bereich 36 ausgehend ausbreitende Teilchen erfasst, wie in Fig. 10 dargestellt.

Auch die Ausbreitungsrichtung 62' liegt innerhalb der Ausbreitungskeule 70', die ebenfalls rotationssymmetrisch zur Flächennormalen 72 zur Frontseite 40 im punktförmigen Wechselwirkungsbereich 36' ausgebildet ist.

Vorzugsweise liegt dabei die ausgewählte Ausbreitungsrichtung 62' in einem Winkel β zu einer Ebene 150, in welcher sich die auf das Target 14 einfallende und von diesem reflektierte Teststrahlung 30 ausbreitet.

Gleichzeitig ist der Winkel β der Winkel zwischen der Flächennormalen 72 und der ausgewählten Ausbreitungsrichtung 62' und ebenfalls kleiner 80°, vorzugsweise kleiner 60°.

Im Gegensatz zum ersten Ausführungsbeispiel sind bei dem zweiten Ausführungsbeispiel nur oberflächliche Schädigungen des Targets 14 detektierbar, welche zu einer Ausbreitung eines Teilchenstroms in Richtung des Drucksensors 100' führen.

Um das Target 14 in mehreren Teststellen 140 beaufschlagen zu können, wird die Ebene 150, in welcher sich die Teststrahlung 30 ausbreitet, konstant gehalten, während das Target 14 mitsamt dem Vakuumgefäß 10 relativ zu der Ebene 150 mit einer zweiachsigen Verschiebeeinheit 160 bewegbar ist.

Die zweiachsige Verschiebeeinheit 160 umfasst eine stationär angeordnete Basis 162, auf welcher ein erster Schlitten 164 angeordnet ist, der relativ zur Basis 162 in einer parallel zur Ebene 150 verlaufenden Y-Richtung verschiebbar ist.

Auf den ersten Schlitten 164 sitzt ein zweiter Schlitten 166, der relativ zum ersten Schlitten 164 in einer quer zur Ebene 150 verlaufenden X-Richtung verschiebbar ist, so dass insgesamt das Target in X- und Y-Richtung verschiebbar ist, wobei vorzugsweise die X-Richtung und die Y-Richtung ungefähr parallel zur Frontseite 40 des Targets 14 verlaufen.

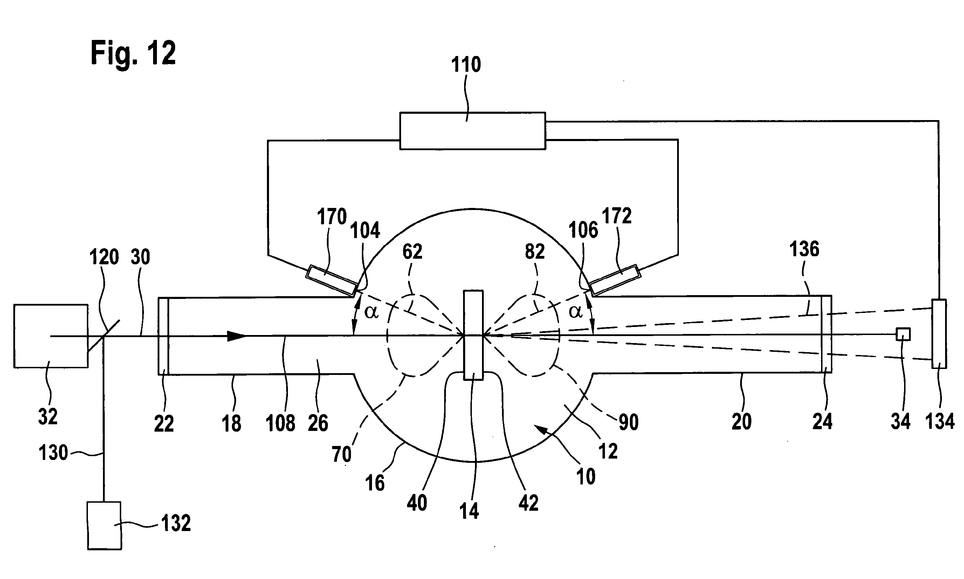

Bei einem dritten Ausführungsbeispiel, dargestellt in Fig. 12 sind diejenigen Elemente, die mit dem ersten Ausführungsbeispiel identisch sind, mit denselben Bezugszeichen versehen.

Im Gegensatz zum ersten Ausführungsbeispiel sind bei dem dritten Ausführungsbeispiel anstelle der Drucksensoren 100 und 102 Sensorenköpfe 170, 172 von Stromsensoren vorgesehen, welche in der Lage sind, einen durch den Teilchenstrom in der ausgewählten Ausbreitungsrichtung 62 bzw. 82 fließenden elektrischen Strom zwischen dem Target 14 und dem jeweiligen Sensorkopf 170 und 172 zu messen, so dass anstelle eines durch den Teilchenstrom in der jeweiligen Ausbreitungsrichtung 62 bzw. 82 erzeugten Druckanstiegs ein elektrischer Strom zwischen dem Target 14 und dem jeweiligen Sensorkopf 170 und/oder 172 gemessen werden kann.

Ein viertes Ausführungsbeispiels einer erfindungsgemäßen Einrichtung ist gebildet durch ein Laserverstärkersystem 180, welches einen Laserresonator 182 umfasst, der durch Resonatorspiegel 184 und 186 definiert ist.

In diesem Laserresonator ist ein laseraktives Medium 188 vorgesehen und außerdem sind beispielsweise noch weitere optische Komponenten, beispielsweise Linsen 190 und 192 zur Formung einer sich ausbildenden Laserstrahlung 194 vorgesehen.

Das gesamte Laserverstärkersystem 180 ist in der Kammer 12" des Vakuumgefäßes 10" vorgesehen, welches noch ein Austrittsfenster 196 aufweist, durch welches die Laserstrahlung 194 austreten kann.

Das Target 14" wird bei diesem vierten Ausführungsbeispiel gebildet durch eine der optischen Komponenten, beispielsweise den Resonatorspiegel 186.

Erfolgt eine Schädigung des Resonatorspiegels 186 durch die Laserstrahlung 194, so breitet sich ausgehend von dem Wechselwirkungsbereich 36" durch Ablation der Teilchenstrom 52" aus, der durch den Drucksensor 100" detektiert werden kann und somit über eine mit dem Drucksensor 100" gekoppelte Detektionseinrichtung, die in gleicher Weise wie beispielsweise beim ersten Ausführungsbeispiel arbeitet, wird die Tatsache, dass sich der Teilchenstrom 52" ausbreitet, erkannt und somit eine Schädigung festgestellt.

Bei dem vierten Ausführungsbeispiel kann für die gesamte Kammer 12" ein einziger Drucksensor 100" vorgesehen sein.

Es ist aber auch denkbar, mehrere Drucksensoren 100" vorzusehen, wobei jeder in geeigneter Anordnung relativ zu der optischen Komponente 184, 186, 188, 190 oder 192 positioniert werden kann, dass möglichst schnell eine durch die Laserstrahlung eintretende Schädigung durch Ablation festgestellt wird.

Bei dem vierten Ausführungsbeispiel stellt somit das Laserverstärkersystem 180 einerseits selbst die Laserstrahlungsquelle für die Laserstrahlung 194 dar und andererseits erfolgt in der Laserstrahlungsquelle 194 unmittelbar selbst eine Überwachung der einzelnen optischen Komponenten 184, 186, 188, 190 und 192 auf eine potentielle Schädigung durch die Laserstrahlung, die dann durch die Druckänderung rasch und sicher erkannt werden kann.

## Patentansprüche

1. Einrichtung zum Erkennen der Schädigung eines mittels einer Strahlung beaufschlagten Targets,
**dadurch gekennzeichnet, dass** das Target (14) in einer Vakuumkammer (26) angeordnet ist, dass der Vakuumkammer (26) ein Teilchenstromsensor (100, 102) zugeordnet ist und dass der Teilchenstromsensor (100, 102) mit einer Detektionseinrichtung (110) gekoppelt ist, welche so arbeitet, dass sie einen schädigungsbedingten Teilchenstrom (52) erkennt.

2. Einrichtung nach Anspruch 1, **dadurch gekennzeichnet, dass** der Teilchenstromsensor (100, 102) relativ zum Target (14) so angeordnet ist, dass sich ein von einem Wechselwirkungsbereich (36, 38) von Strahlung (30) und Target (14) ausbreitender Teilchenstrom (52) im Wesentlichen ohne Umlenkung zum Teilchenstromsensor (100, 102) ausbreitet.

3. Einrichtung nach Anspruch 1 oder 2, **dadurch gekennzeichnet, dass** der Teilchenstromsensor (100) einer von der Strahlung (30) beaufschlagten Frontseite (40) des Targets (14) zugewandt ist.

4. Einrichtung nach einem der Ansprüche 1 bis 3, **dadurch gekennzeichnet, dass** der Teilchenstromsensor (102) einer Rückseite (42) des Targets (14) zugewandt ist, aus welcher die Strahlung (30) beim Durchsetzen des Targets (14) austritt.

5. Einrichtung nach einem der voranstehenden Ansprüche, **dadurch gekennzeichnet, dass** der Teilchenstromsensor (100, 102) so angeordnet ist, dass er einen Teilchenstrom (52) in einer Ausbreitungsrichtung (64, 84) detektiert, die mit einer senkrecht zur jeweiligen Seite (40, 42) des Targets (14) und durch Wechselwirkungsbereich (36, 38) von Strahlung (30) und Target (14) verlaufenden Flächennormalen (72) einen Winkel (α, β) von weniger als 80° einschließt.

6. Einrichtung nach Anspruch 5, **dadurch gekennzeichnet, dass** die Ausbreitungsrichtung (64, 84) mit der Flächennormalen (72) einen Winkel (α, β) von weniger als 70° einschließt.

7. Einrichtung nach Anspruch 6, **dadurch gekennzeichnet, dass** die Ausbreitungsrichtung (64, 84) mit der Flächennormalen (72) einen Winkel (α, β) von weniger als 60° einschließt.

8. Einrichtung nach einem der voranstehenden Ansprüche, **dadurch gekennzeichnet, dass** der Druck in der Vakuumkammer (26) so niedrig ist, dass die mittlere freie Weglänge der Atome und/oder Moleküle in der Vakuumkammer größer ist als ein Abstand zwischen dem Wechselwirkungsbereich (36, 38) von Strahlung (30) und Target (14) sowie dem Teilchenstromsensor (100, 102).

9. Einrichtung nach Anspruch 8, **dadurch gekennzeichnet, dass** der Druck in der Vakuumkammer (26) kleiner als 10⁻⁴ mbar ist.

10. Einrichtung nach Anspruch 9, **dadurch gekennzeichnet, dass** der Druck in der Vakuumkammer (26) kleiner als 10⁻⁵ mbar ist.

11. Einrichtung nach einem der voranstehenden Ansprüche, **dadurch gekennzeichnet, dass** der schädigungsbedingte Druckanstieg mindestens ungefähr 1/50 des Drucks in der Vakuumkammer (26) beträgt.

12. Einrichtung nach einem der voranstehenden Ansprüche, dass der Teilchenstromsensor (100, 102) einen Arbeitsbereich aufweist, der bei Drucken von kleiner als 10⁻⁴ mbar liegt.

13. Einrichtung nach einem der voranstehenden Ansprüche, dass der Teilchenstromsensor ein Drucksensor ist.

14. Einrichtung nach einem der voranstehenden Ansprüche, dass der Teilchenstromsensor (170, 172) ein Sensor für einen vom Teilchenstrom (52) ausgelösten elektrischen Strom zwischen dem Target (14) und einem Sensorkopf ist.

15. Einrichtung nach einem der voranstehenden Ansprüche, dass das Target mit einer Sensorstrahlung (130) beaufschlagt ist, und dass die Schädigung des Targets (14) durch eine Beeinflussung der Sensorstrahlung (130) detektierbar ist.

16. Einrichtung nach Anspruch 15, **dadurch gekennzeichnet, dass** an dem Target (14) eine Streuung der Sensorstrahlung (130) erfolgt und dass die Schädigung durch Detektion der Streuung der Sensorstrahlung (130) erkennbar ist.

17. Einrichtung nach einem der voranstehenden Ansprüche, **dadurch gekennzeichnet, dass** die Strahlung eine Teststrahlung ist.

18. Einrichtung nach einem der voranstehenden Ansprüche, **dadurch gekennzeichnet, dass** die Strahlung Laserstrahlung in einem Laserverstärkersystem ist und dass das Target (14) eine optische Komponente des Laserverstärkersystems ist.

19. Einrichtung zur Durchführung eines Resistenztests eines Targets (14) gegenüber auf dieses auftreffender Teststrahlung (30) umfassend eine Teststrahlungsquelle (32) zur Erzeugung der Teststrahlung (30) und eine Einrichtung zum Erkennen der Schädigung des Targets, **dadurch gekennzeichnet, dass** die Einrichtung zum Erkennen der Schädigung des Targets nach einem der Ansprüche 1 bis 17 ausgebildet ist.

20. Einrichtung nach Anspruch 19, **dadurch gekennzeichnet, dass** die Teststrahlung (30) und das Target (14) relativ zueinander bewegbar sind.

21. Einrichtung nach Anspruch 20, **dadurch gekennzeichnet, dass** das Target (14) relativ zur Teststrahlung (30) bewegbar ist.

22. Einrichtung nach Anspruch 21, **dadurch gekennzeichnet, dass** das Target (14) stationär in der Vakuumkammer (26) angeordnet ist und die Vakuumkammer (26) mitsamt dem Target (14) relativ zur Teststrahlung (30) bewegbar ist.

23. Einrichtung nach einem der voranstehenden Ansprüche, **dadurch gekennzeichnet, dass** die Strahlungsquelle (32) zum Erzeugen der Strahlung (30) eine gepulste Strahlungsquelle ist.

24. Einrichtung nach Anspruch 23, **dadurch gekennzeichnet, dass** die Strahlungsquelle (32) eine Strahlungsquelle für elektromagnetische Strahlung ist.

25. Einrichtung nach Anspruch 24, **dadurch gekennzeichnet, dass** die Strahlungsquelle (32) zum Erzeugen der Strahlung eine Laserstrahlungsquelle ist.

26. Verfahren zum Erkennen der Schädigung eines mittels einer Strahlung (30) beaufschlagten Targets (14), **dadurch gekennzeichnet, dass** das Target (14) im Vakuum angeordnet wird, dass in dem Vakuum ein schädigungsbedingter Teilchenstrom (52) detektiert wird.

27. Verfahren nach Anspruch 26, **dadurch gekennzeichnet, dass** ein sich von einem Wechselwirkungsbereich (36, 38) von Strahlung (30) und Target (14) ausbreitender Teilchenstrom (52) im Wesentlichen ohne Umlenkung detektiert wird.

28. Verfahren nach Anspruch 26 oder 27, **dadurch gekennzeichnet, dass** ein sich von einer von der Strahlung (30) beaufschlagten Frontseite (40) des Targets (14) ausbreitender Teilchenstrom (52) detektiert wird.

29. Verfahren nach einem der Ansprüche 26 bis 28, **dadurch gekennzeichnet, dass** ein sich von einer Rückseite (42) des Targets (14), aus welcher die Strahlung (30) beim Durchsetzen des Targets (14) austritt, ausbreitender Teilchenstrom (52) detektiert wird.

30. Verfahren nach einem der Ansprüche 26 bis 29, **dadurch gekennzeichnet, dass** der Teilchenstrom (52) in einer Ausbreitungsrichtung (64, 84) detektiert wird, die mit einer senkrecht zur jeweiligen Seite (40, 42) des Targets (14) und durch den Wechselwirkungsbereich (36, 38) von Strahlung (30) und Target (14) verlaufenden Flächennormalen (72) einen Winkel (α, β) von weniger als 80° einschließt.

31. Verfahren nach Anspruch 30, **dadurch gekennzeichnet, dass** die Ausbreitungsrichtung (64, 84) mit der Flächennormalen (72) einen Winkel (α, β) von weniger als 70° einschließt.

32. Verfahren nach Anspruch 31, **dadurch gekennzeichnet, dass** die Ausbreitungsrichtung (64, 84) mit der Flächennormalen (72) einen Winkel (α, β) von weniger als 60° einschließt.

33. Verfahren nach einem der Ansprüche 26 bis 32, **dadurch gekennzeichnet, dass** der Druck im Vakuum so niedrig gehalten wird, dass die mittlere freie Weglänge der Atome und/oder Moleküle im Vakuum größer ist als ein Abstand zwischen dem Wechselwirkungsbereich (36, 38) von Strahlung (30) und Target (14) und einem Ort der Detektion des Teilchenstroms (52).

34. Verfahren nach einem der Ansprüche 26 bis 33, **dadurch gekennzeichnet, dass** der Druck in der Vakuumkammer (26) kleiner als 10⁻⁴ mbar gehalten wird.

35. Verfahren nach Anspruch 34, **dadurch gekennzeichnet, dass** der Druck in der Vakuumkammer (26) kleiner als 10⁻⁵ mbar gehalten wird.

36. Verfahren nach einem der Ansprüche 26 bis 35, **dadurch gekennzeichnet, dass** der schädigungsbedingte Druckanstieg mindestens ungefähr 1/50 des Drucks im Vakuum beträgt.

37. Verfahren nach einem der Ansprüche 26 bis 36, **dadurch gekennzeichnet, dass** der Teilchenstrom (52) in einen Arbeitsbereich erfasst wird, der bei Drucken von kleiner als 10⁻⁴ mbar liegt.

38. Verfahren nach einem der Ansprüche 26 bis 37, **dadurch gekennzeichnet, dass** der Teilchenstrom (52) durch einen Druckanstieg im Vakuum detektiert wird.

39. Verfahren nach einem der Ansprüche 26 bis 38, **dadurch gekennzeichnet, dass** der Teilchenstrom (30) durch einen elektrischen Strom zwischen dem Target (14) und einem Sensorkopf (170, 172) detektiert wird.

40. Verfahren nach einem der Ansprüche 26 bis 39, **dadurch gekennzeichnet, dass** das Target mit einer Sensorstrahlung (130) beaufschlagt wird, und dass die Schädigung des Targets (14) durch eine Beeinflussung der Sensorstrahlung detektiert wird.

41. Verfahren nach Anspruch 40, **dadurch gekennzeichnet, dass** die Schädigung durch Detektion der Streuung einer Sensorstrahlung (130) erfasst wird.

42. Verfahren nach einem der Ansprüche 26 bis 41, **dadurch gekennzeichnet, dass** die Strahlung eine Teststrahlung ist.

43. Verfahren nach einem der Ansprüche 26 bis 42, **dadurch gekennzeichnet, dass** die Strahlung Laserstrahlung in einem Laserverstärkersystem ist und dass das Target (14') eine optische Komponente des Laserverstärkersystems ist.

44. Verfahren zur Durchführung eines Resistenztests eines Targets (14) gegenüber auf dieses auftreffender Teststrahlung (30) wobei eine Schädigung des Targets (14) detektiert wird, **dadurch gekennzeichnet, dass** das Verfahren zum Erkennen der Schädigung des Targets (14) nach einem der Ansprüche 26 bis 41 durchgeführt wird.

45. Verfahren nach Anspruch 44, **dadurch gekennzeichnet, dass** die Teststrahlung (30) und das Target (14) relativ zueinander bewegt werden.

46. Verfahren nach Anspruch 45, **dadurch gekennzeichnet, dass** das Target (14) relativ zur Teststrahlung (30) bewegt wird.

47. Verfahren nach Anspruch 46, **dadurch gekennzeichnet, dass** das Target (14) stationär in einer Vakuumkammer (26) angeordnet wird und die Vakuumkammer (26) mitsamt dem Target (14) relativ zur Teststrahlung (30) bewegt wird.

48. Verfahren nach einem der Ansprüche 44 bis 47, **dadurch gekennzeichnet, dass** die Strahlung (30) gepulst eingesetzt wird.

49. Verfahren nach einem der Ansprüche 44 bis 47, **dadurch gekennzeichnet, dass** als Strahlung (30) elektromagnetische Strahlung eingesetzt wird.

50. Verfahren nach Anspruch 49, **dadurch gekennzeichnet, dass** als Strahlung (30) Laserstrahlung eingesetzt wird.

51. Verfahren nach Anspruch 50, **dadurch gekennzeichnet, dass** die Strahlung (30) im Wellenlängenbereich von infrarot bis ultraviolett liegt.
